# EUROPEAN PATENT APPLICATION

(11) **EP 2 114 055 A1**
(43) Date of publication of application: **04.11.2009**
(21) Application number: 09153146.7
(22) Date of filing: 18.02.2009
(51) Int. Cl.: H04L 29/08, H04L 29/06

(54) **Method of establishing virtual security keypad session from a mobile device using Java virtual machine**

(30) Priority: 11.03.2008 US 46192
(71) Applicant: Honeywell International Inc., Morristown, NJ 07962 (US)
(72) Inventor: Blum, William R., Huntington Station, NY 11746 (US); Malone, Steve, Farmingdale, NY 11735 (US); Romanczyk, Piotr, Melville, NY 11747 (US)
(74) Representative: Buckley, Guy Julian

(57) **Abstract**

A system and method are provided that allow mobile devices to securely communicate over wireless network with one or more security system control panels for controlling the security systems remotely. A mobile device may include an application or software that presents a virtual security keypad to the user on the mobile device for entering data or receiving data as if the user were directly using a security system control panel at a premise being secured. Mobile device communicates with a network operating center system using encrypted communication. The network operating decrypts the communication from the mobile device and sends it to a security system control panel. The network operating center system receives responses from the security system control panel, encrypts the responses and sends to the mobile device.

## Description

### CROSS-REFERENCE TO RELATED APPLICATIONS

This application is related to the following commonly-owned, co-pending United States Patent Applications, the entire contents and disclosure of each of which is expressly incorporated by reference herein as if fully set forth herein. U.S. Patent Application Serial No. 11/861,370 for "METHOD OF ARMING-DISARMING SECURITY PANEL OVER UN-ENCRYTPED COMMUNICATION PATHS" filed on September 26, 2007; U.S. Patent Application Serial No. 11/705,659, for "AUTO CONNECT VIRTUAL KEYPAD" filed on February 13, 2007.

### FIELD OF THE INVENTION

The present disclosure relates to security systems and more particularly to establishing virtual security keypad session from a device as cellular phone, personal digital assistant, or like, using Java ^{™} virtual machine.

### BACKGROUND OF THE INVENTION

In today's world increasingly more people rely on continued connectivity with their work, family and their homes. Connectivity is typically accomplished by mobile phones, Personal digital assistants (PDA) or Blackberries ^{™} or like Mobile Devices or MD. Staying in touch with home or business security systems is becoming increasingly important in the fast moving and mobile world. Therefore a novel method is disclosed to securely communicate with security home or business systems via such mobile or phone like devices.

### BRIEF SUMMARY OF THE INVENTION

Method and system for establishing virtual security keypad session from a mobile device are provided. The method in one aspect may comprise establishing an application operable to execute on a virtual machine on a mobile device. The application is enabled to present virtual security keypad on said mobile device. The method may further include allowing a user to input data on the mobile device via the application to control a remote security system. The application encrypts said input data and communicates said encrypted input data as one or more requests over wireless communication network. The application further receives one or more encrypted response data representing one or more responses from said remote security system. The application further decrypts and presents said encrypted response data on the virtual security keypad.

A method of establishing virtual security keypad session from a mobile device, in another aspect, may comprise receiving a request to initiate a session from a mobile device implementing a virtual security keypad and establishing a connection with a security control panel of a security system securing a premise identified in the request. The method may further comprise receiving one or more encrypted requests from the mobile device, unpacking and decrypting said one or more encrypted requests, and sending said unpacked and decrypted requests to said security control panel. The method may yet further comprise receiving one or more responses from said security control panel, encrypting said one or more responses, and sending said encrypted one or more responses to the mobile device.

A system for establishing virtual security keypad session from a mobile device, in one aspect, may comprise a mobile device and an application executing on the mobile device operable to provide virtual security keypad. The application may be further operable to request a communication session with a security system control panel securing a premise, to send encrypted communication requests for controlling said security system control panel, and to receive encrypted communication responses. The application may be further operable to decrypt said encrypted communication responses and present said decrypted responses on the virtual security keypad. A network operating center system is operable to receive said request for a communication session from said application and to establish a connection with said security system control panel. The network operating center system may be further operable to receive said encrypted communication requests from said application, decrypt said communication requests and send said decrypted communication requests to said security system control panel. The network operating center system may be further operable to receive responses from said security system control panel, encrypt said responses from said security system control panel and send to said application.

A system for establishing virtual security keypad session from a mobile device, in another aspect, may comprise means for receiving a request to initiate a session from a mobile device implementing a virtual security keypad, means for establishing a connection with a security control panel of a security system securing a premise identified in the request; and means for receiving one or more encrypted requests from the mobile device. The system may further comprise means for unpacking and decrypting said one or more encrypted requests, means for sending said unpacked and decrypted requests to said security control panel, and means for receiving one or more responses from said security control panel. The system may further comprise means for encrypting said one or more responses and means for sending said encrypted one or more responses to the mobile device.

A program storage device readable by a machine, tangibly embodying a program of instructions executable by the machine to perform the above-described method steps may be also provided.

Further features as well as the structure and operation of various embodiments are described in detail below with reference to the accompanying drawings. In the drawings, like reference numbers indicate identical or functionally similar elements.

### BRIEF DESCRIPTION OF THE DRAWINGS

Fig. 1 is a high-level architectural diagram that illustrates the system of the present disclosure in one embodiment.

Fig. 2 illustrates a method and protocol details of establishing virtual connection from a security panel via mobile phone, PDA, etc., in one embodiment of the present disclosure.

### DETAILED DESCRIPTION

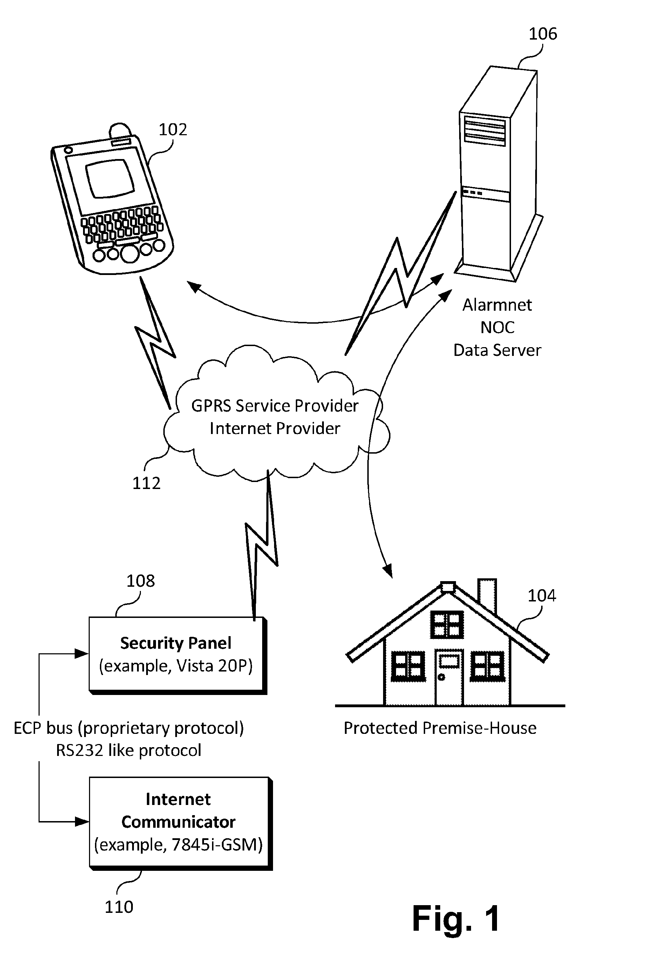

A system and method are provided that allow mobile devices to securely communicate over wireless network with one or more security system control panels for controlling the security systems remotely. Fig. 1 is a high-level architectural diagram that illustrates the system of the present disclosure in one embodiment. A mobile device 102 may include an application or software that presents a virtual security keypad to the user on the mobile device for entering data or receiving data as if the user were directly using a security system control panel at a premise being secured 104. Thus, a virtual security keypad emulates a security control panel keypad, for example, on a mobile device.

The system and method of the present disclosure in one embodiment leverages Hypertext Transfer Protocol (HTTP) or HTTPS (Hypertext Transfer Protocol over Secure Socket Layer) protocol and Java^{™} virtual machine (VM) built in phones, personal digital assistants (PDAs) or Blackberries^{™} or like mobile devices (MD). In one embodiment, HTTP and HTTPS are data transport layers and Java^{™} VM provides the convenient way to render data on the mobile devices. Mobile devices may install Java^{™} application (also referred to as Midlet). The Java^{™} application provides or renders the virtual security keypad on the mobile devices. A Midlet issues HTTP/HTTPS requests to Network Operating Center (NOC) such as Honeywell's Alarmnet Data Server (106).

Communication protocol may be implemented for communicating between the mobile device's application program that provides the virtual security keypad and a network operating center (106) that provides communication connections to and from the security control panel (108). An example of a network operating center (106) is Honeywell's Alarmnet Data Server. In one embodiment of the present disclosure, the following types of requests or protocols are utilized: Session_Init, Session_Poll, Session_KeyCodes, Session_End. Session_Init request prepares NOC for incoming session to security panel. This request, for example, contains security panel identification and globally unique session identification. NOC establishes virtual connection with the security panel, for example, similarly to a Total Connect session. Session_Poll requests the security panel status. Session_KeyCodes request carries the end-user (MD's user) keystrokes that perform actions on a security panel. Examples of actions may include but are not limited to ARM or DISARM. Briefly, ARM command refers to arming or turning on a security system. Similarly, DISARM command refers to disarming or turning off the security system. Session_End request requests to end the communication session with a security panel. Other command may be issued using the virtual security keypad.

As described above, MD (102) can operate in HTTP or HTTPS mode. However, HTTPS requires substantial MD resources effectively causing sluggish responses. The system and method of the present disclosure in one embodiment can operate in HTTP secure mode. In this mode HTTP requests contain URL parameters that describe one or more session requests described above for establishing a session and communicating between the virtual keypad of the Midlets (102) and the security system. In one embodiment, those URL parameters are encrypted, for example, using AES encryption standard, and may be encoded, for example, by converting binary into hex string and passed, for instance, within HTTP header. Any other encryption methodology may be used in the system and method of the present disclosure. By using Midlet or like JAVA^{™} based applications that can enable virtual security keypad on mobile devices, the end-user extends the access to his/her home or business security panel.

A premise being secured (104) includes a security control panel (108) for controlling the security system installed at the premise (104) and an Internet communicator (110) that enables the security control panel (108) to communicate over the Internet. MDs (102), NOC (106) and security panel (108) for example via an Internet communicator (110) may communicate over the Internet, for example, via an Internet service provider (112).

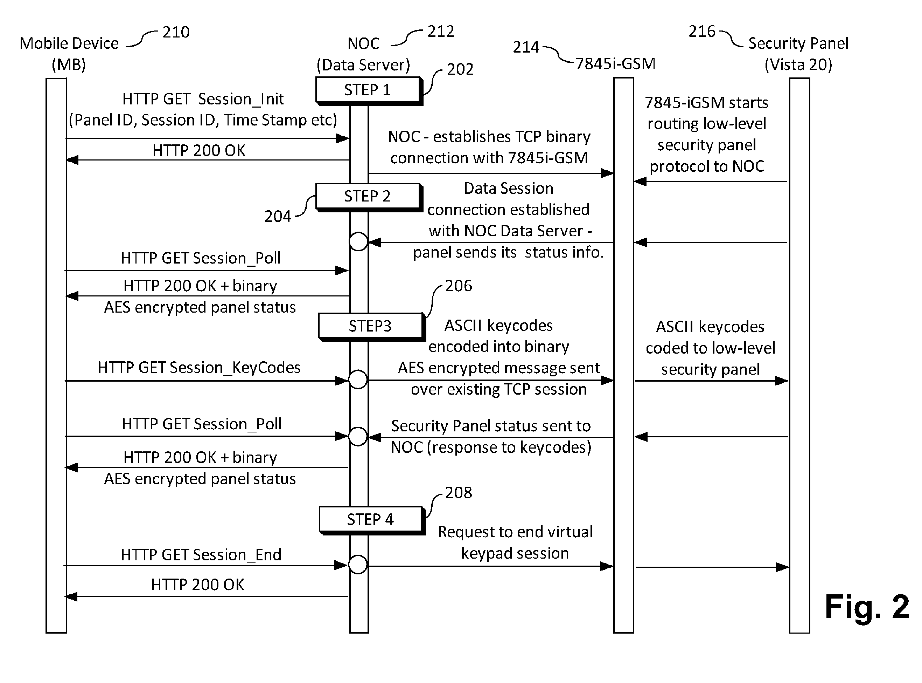

Fig. 2 illustrates a method and protocol details of establishing virtual connection from a security panel via mobile phone, PDA, etc., in one embodiment of the present disclosure. Mobile device 210 represents any type of mobile devices capable of running Java^{™} applications or like, and communicating wirelessly. Such devices may include but are not limited to portable electronic devices, cellular phones, personal digital assistants, smart phones, and laptops. NOC (212) generally represents a server that services communications between the mobile devices (210) and security control systems located at the premises being secured. 7845i-GSM (214) generally refers to a device that delivers Internet and/or digital communications via a wireless network such as the GSM (Global System for Mobile) network. 7845i-GSM is an example such devices. Any other devices capable of providing digital communications in a mobile network may be utilized in the system and method of the present disclosure. Security panel (216) generally refers to a security system control panel that is located at a premise being secured and may include user interface such as a screen monitor and a keypad. An example of a security panel is Vista 20.

At step 1 (202), when Java^{™} Midlet application is activated on a mobile device (210) such as phone or PDA, it sends HTTP Session_Init request to Network Operating Center (NOC) (212). HTTP Session_Init request may be embodied as HTTP GET request and contains encrypted security panel identification, for example, 7845i-GSM radio identification, which routes data packets between virtual keypad and security panel. There may be other pieces of information such as session identification associated with Session_Init embedded into the request. Upon receiving the request NOC (212) establishes TCP binary connection with security panel (216) via 7845i-GSM Internet communicator (214), for instance, similarly as is done in the Total Connect services.

At step 2 (204), once NOC (212) establishes connection with security panel (216), the panel (216) sends encrypted status information back to NOC (212) via 7845i-GSM Internet communicator (214). It is a low-level security data and it is encrypted using AES (Advanced Encryption Standard). Any other encryption scheme may be utilized. Meanwhile, Midlet application on Mobile Device (MB) (210) sends its Session_Poll HTTP request. Upon receiving the Session_Poll request NOC (212) looks up the session identification and attaches the encrypted data from the security panel as the HTTP response to the Session_Poll request.

At step 3 (206), when end-user keys a command on Midlet (virtual security keypad) on the mobile device (210), the end-user keys the sequence of numbers or special symbols (such as "*" or "#"). The ASCII key values are captured by Midlet application, encrypted using AES (Advanced Encryption Standard) and may be encoded, for example, by converting binary into hex strings. They can be embedded into HTTP string character request. Any other encryption may be utilized. This request is labeled as Session_KeyCodes. Once HTTP request is formed by Midlet application, it is then sent from the mobile device (210) running the Midlet application to NOC (212) for processing. When a HTTP Session_KeyCodes request is received at NOC (212) it is unpacked, for example, to get binary content, decrypted, and then formatted, encrypted and sent to security panel (216) via 7845-iGSM Internet communicator (214). When a security panel (216) receives a message, it responds to it as it would to real security keypad. Data from panel forms the HTTP response with binary data content. The HTTP response is then sent to the mobile device (210) via 7845-iGSM Internet communicator (214) and NOC (212).

At step 4 (208), when the end-user wishes to end the virtual session, Midlet application on the mobile device (210) sends Session_End HTTP request to NOC (212) which in turn breaks the TCP binary connection with Internet communicator (7845i-GSM) (214) and security panel (216).

Various aspects of the present disclosure may be embodied as a program, software, or computer instructions embodied in a computer or machine usable or readable medium, which causes the computer or machine to perform the steps of the method when executed on the computer, processor, and/or machine.

The system and method of the present disclosure may be implemented and run on a general-purpose computer or computer system. The computer system may be any type of known or will be known systems and may typically include a processor, memory device, a storage device, input/output devices, internal buses, and/or a communications interface for communicating with other computer systems in conjunction with communication hardware and software, etc.

The terms "computer system" and "computer network" as may be used in the present application may include a variety of combinations of fixed and/or portable computer hardware, software, peripherals, and storage devices. The computer system may include a plurality of individual components that are networked or otherwise linked to perform collaboratively, or may include one or more stand-alone components. The hardware and software components of the computer system of the present application may include and may be included within fixed and portable devices such as desktop, laptop, server. A module may be a component of a device, software, program, or system that implements some "functionality", which can be embodied as software, hardware, firmware, electronic circuitry, or etc.

The embodiments described above are illustrative examples and it should not be construed that the present invention is limited to these particular embodiments. Thus, various changes and modifications may be effected by one skilled in the art without departing from the spirit or scope of the invention as defined in the appended claims.

## Claims

1. A method of establishing virtual security keypad session from a mobile device, comprising:
establishing an application operable to execute on a virtual machine on a mobile device, said application enabled to present virtual security keypad on said mobile device; and
allowing a user to input data on the mobile device via the application to control a remote security system, said application encrypting said input data and communicating said encrypted input data as one or more requests over wireless communication network, said application further receiving one or more encrypted response data representing one or more responses from said remote security system, said application further decrypting and presenting said encrypted response data on the virtual security keypad.

2. The method of claim 1, wherein said application is a Java^{™} application and said virtual machine is a Java^{™} virtual machine.

3. The method of claim 1, wherein said application is Midlet.

4. The method of claim 1, wherein said wireless communication network includes Internet.

5. A method of establishing virtual security keypad session from a mobile device, comprising:
receiving a request to initiate a session from a mobile device implementing a virtual security keypad;
establishing a connection with a security control panel of a security system securing a premise identified in the request;
receiving one or more encrypted requests from the mobile device;
unpacking and decrypting said one or more encrypted requests;
sending said unpacked and decrypted requests to said security control panel;
receiving one or more responses from said security control panel;
encrypting said one or more responses; and
sending said encrypted one or more responses to the mobile device.

6. A system for establishing virtual security keypad session from a mobile device, comprising:
a mobile device;
an application executing on the mobile device and operable to provide virtual security keypad, the application further operable to request a communication session with a security system control panel securing a premise, said application further operable to send encrypted communication requests for controlling said security system control panel and to receive encrypted communication responses, the application further operable to decrypt said encrypted communication responses and present said decrypted responses on the virtual security keypad; and
a network operating center system operable to receive said request for a communication session from said application and to establish a connection with said security system control panel, the network operating center system further operable to receive said encrypted communication requests from said application, decrypt said communication requests and send said decrypted communication requests to said security system control panel, the network operating center system further operable to receive responses from said security system control panel, encrypt said responses from said security system control panel and send to said application.

7. A system for establishing virtual security keypad session from a mobile device, comprising:
a mobile device;
means on the mobile device for establishing virtual security keypad; and
means for allowing a user to input data on the mobile device to control a remote security system, and for encrypting said input data on the mobile device and communicating said encrypted input data as one or more requests over a wireless communication network, and for further receiving one or more encrypted response data representing one or more responses from said remote security system, decrypting and presenting said encrypted response data on the virtual security keypad.

8. A system for establishing virtual security keypad session from a mobile device, comprising:
means for receiving a request to initiate a session from a mobile device implementing a virtual security keypad;
means for establishing a connection with a security control panel of a security system securing a premise identified in the request;
means for receiving one or more encrypted requests from the mobile device;
means for unpacking and decrypting said one or more encrypted requests;
means for sending said unpacked and decrypted requests to said security control panel;
means for receiving one or more responses from said security control panel;
means for encrypting said one or more responses; and
means for sending said encrypted one or more responses to the mobile device.

9. A program storage device readable by a machine, tangibly embodying a program of instructions executable by the machine to perform a method of establishing virtual security keypad session from a mobile device, comprising:
establishing an application operable to execute on a virtual machine on a mobile device, said application enabled to present virtual security keypad on said mobile device; and
allowing a user to input data on the mobile device via the application to control a remote security system, said application encrypting said input data and communicating said encrypted input data as one or more requests over wireless communication network, said application further receiving one or more encrypted response data representing one or more responses from said remote security system, said application further decrypting and presenting said encrypted response data on the virtual security keypad.

10. A program storage device readable by a machine, tangibly embodying a program of instructions executable by the machine to perform a method of establishing virtual security keypad session from a mobile device, comprising:
receiving a request to initiate a session from a mobile device implementing a virtual security keypad;
establishing a connection with a security control panel of a security system securing a premise identified in the request;
receiving one or more encrypted requests from the mobile device;
unpacking and decrypting said one or more encrypted requests;
sending said unpacked and decrypted requests to said security control panel;
receiving one or more responses from said security control panel;
encrypting said one or more responses; and
sending said encrypted one or more responses to the mobile device
